# EUROPÄISCHE PATENTSCHRIFT

(11) **EP 0 551 619 B1**
(45) Veröffentlichungstag und Bekanntmachung des Hinweises auf die Patenterteilung: **22.03.1995**
(21) Anmeldenummer: 92121159.5
(22) Anmeldetag: 11.12.1992
(51) Int. Cl.: B62D 6/02

(54) **Servolenkvorrichtung**
Power steering mechanism
Mécanisme pour direction assistée

(30) Priorität: 18.01.1992 DE 4201311
(43) Veröffentlichungstag der Anmeldung: 21.07.1993
(73) Patentinhaber: TRW Fahrwerksysteme GmbH & Co. KG, 40547 Düsseldorf (DE)
(72) Erfinder: Eberhart, Eugen, W-4000 Düsseldorf 1 (DE)
(74) Vertreter: Stenger, Watzke & Ring Patentanwälte

(56) Entgegenhaltungen:
- DE-A- 3 523 293
- US-A- 4 819 545
- US-A- 5 046 573
- US-A- 5 070 958

## Beschreibung

Gegenstand der Erfindung ist eine Servolenkvorrichtung zum Zuführen Von Drucköl an linke und rechte Kammern eines Servozylinders über ein Drehschieberventil mit einer Pumpe, wobei zwischen einer Eingangswelle und einer Steuerhülse des Drehschieberventiles ein mit einer Druckfeder beaufschlagter Reaktionskolben eingeschaltet ist, der axial beweglich und drehfest auf der Eingangswelle gelagert und über eine elastische Drehmitnahme mit der Steuerhülse verbunden ist.

Eine Servolenkvorrichtung der vorstehend beschriebenen Gattung ist aus der US-PS 4 819 545 bekannt. Diese Servolenkeinrichtung hat sich zwar in der Praxis bewährt, hat aber den Mangel, daß der Fahrbahnkontakt nicht nur bei einer sehr geringen Fahrzeuggeschwindigkeit, beispielsweise beim Einparken, bis auf eine durch einen Drehstab eingestellte, mechanische Grundlast aufgehoben wird, sondern insbesondere bei erhöhter Fahrzeuggeschwindigkeit im Vergleich zu einer manuellen Lenkung praktisch aufgehoben ist.

Davon ausgehend liegt der Erfindung die **Aufgabe** zugrunde, für eine gattungsgemäße Servolenkvorrichtung eine einfach konstruierte hydraulische Reaktionseinrichtung zu schaffen, mit der die Lenkkraft in Abhängigkeit von der Fahrzeuggeschwindigkeit genauer geregelt werden kann, um insbesondere bei erhöhter Fahrzeuggeschwindigkeit ein verbessertes Lenkgefühl zu erzielen.

Als technische **Lösung** wird dafür vorgeschlagen, daß in eine Leitung zwischen der Pumpe und der mit der Druckfeder belasteten Rückseite des Reaktionskolbens ein Verhältnisdruckregelventil zur Reduzierung des Systemdruckes auf einen geringeren Reaktionsdruck und eine variable Blende zur geschwindigkeitsabhängigen Regelung eines hydraulischen Rückwirkmomentes eingeschaltet sind und daß in eine Leitung zwischen der Vorderseite des Reaktionskolbens und einem Tank eine variable Blende zur geschwindigkeitsabhängigen Regelung eines Rücklaufdruckes eingeschaltet ist.

In weiterer Ausgestaltung der Erfindung wird vorgeschlagen, zwischen der Leitung zur Rückseite des Reaktionskolbens und der Leitung zum Tank ein Abschneideventil zur Begrenzung des maximalen Reaktionsdruckes einzuschalten.

Weiterhin wird vorgeschlagen, zwischen einem Ringraum für die Druckfeder auf der Rückseite des Reaktionskolbens und dem Innenraum der Eingangswelle eine Entlastungsbohrung anzuordnen.

Zur Abdichtung des Ringraumes für die Druckfeder auf der Rückseite des Reaktionskolbens hat es sich als zweckmäßig erwiesen, zwischen der Eingangswelle und einem Lenkgehäuse einen Abdichtkolben anzuordnen und die Druckfeder gegen diesen Abdichtkolben abzustützen. Gleichzeitig kann auf der Rückseite des Abdichtkolbens in der Eingangswelle eine Leckölbohrung angeordnet werden, um das Lecköl in den Tank zurückzuführen.

Mit einer erfindungsgemäß ausgebildeten Servolenkvorrichtung ist es möglich, die Lenkkraft mit einer hydraulischen Reaktionseinrichtung in Abhängigkeit von der Fahrzeuggeschwindigkeit in allen Betriebszuständen genau zu regeln. Ein **Vorteil** dieser Servolenkeinrichtung mit hydraulischer Reaktionseinrichtung besteht darin, daß ein "fingerleichtes" Parkieren" möglich ist, wenn die mit der Druckfeder auf den Reaktionskolben erzeugte mechanische Grundlast durch Schließen der variablen Blende und Stauen des Rücklaufdruckes aufgehoben wird. Die Kompensation der von der Druckfeder erzeugten mechanischen Grundlast kann bei zunehmender Fahrzeuggeschwindigkeit durch Öffnen der beiden Blenden im hydraulischen Reaktionskreis wieder zurückgeführt werden. Bei Geradeausfahrt ohne Lenkmanöver kann der Reaktionsdruck über eine entsprechend dimensionierte Entlastungsbohrung in der Eingangswelle konstant gehalten werden. Wenn jedoch Lenkmanöver eingeleitet werden, bewirkt der dann erhöhte Systemdruck über die variable Blende vor der Reaktionskammer ein Rückwirkmoment auf die Eingangswelle, welches dem Eingangsmoment und dem dadurch erzeugten Systemdruck entgegen wirkt.

Weitere Einzelheiten und Vorteile ergeben sich aus der nachfolgenden Beschreibung der zugehörigen Zeichnungen, in denen eine erfindungsgemäß ausgebildete Servolenkvorrichtung mit einem hydraulischen Schaltplan schematisch dargestellt worden ist. In den Zeichnungen zeigen:

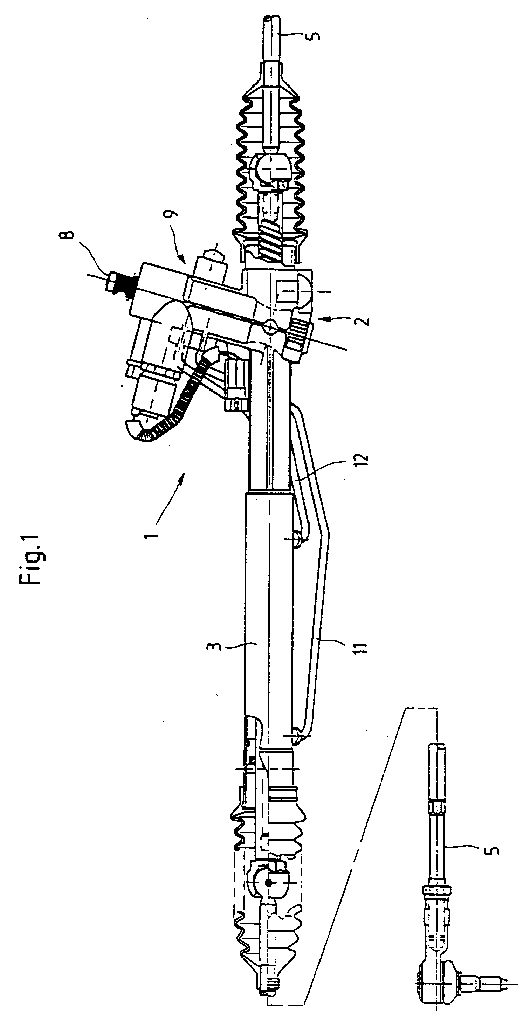

- Fig. 1: eine Servolenkeinrichtung in Ansicht;

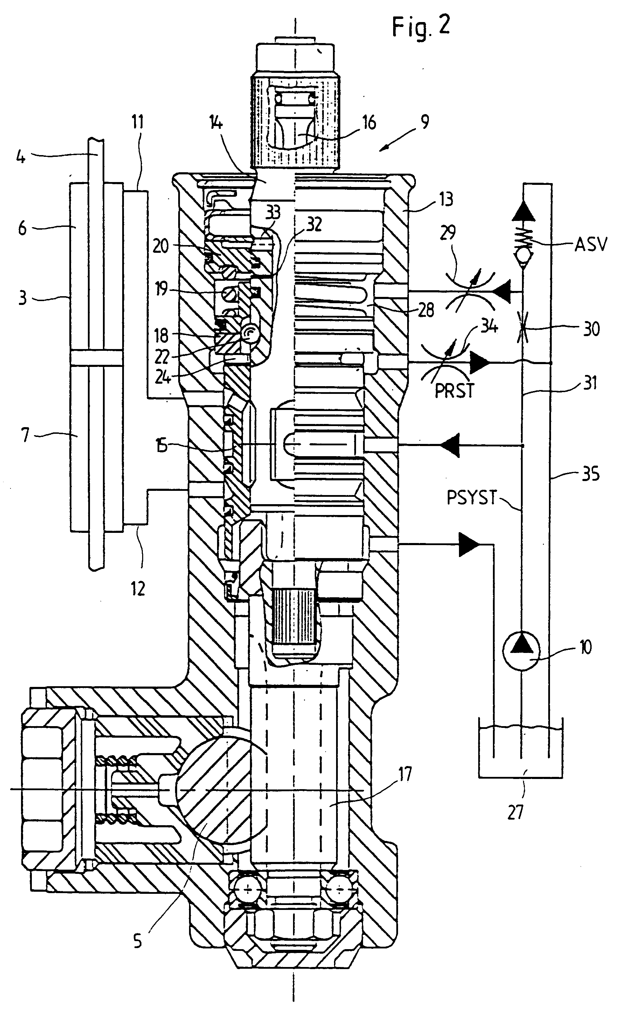

- Fig. 2: ein Lenkgehäuse der Servolenkeinrichtung im Längsschnitt;

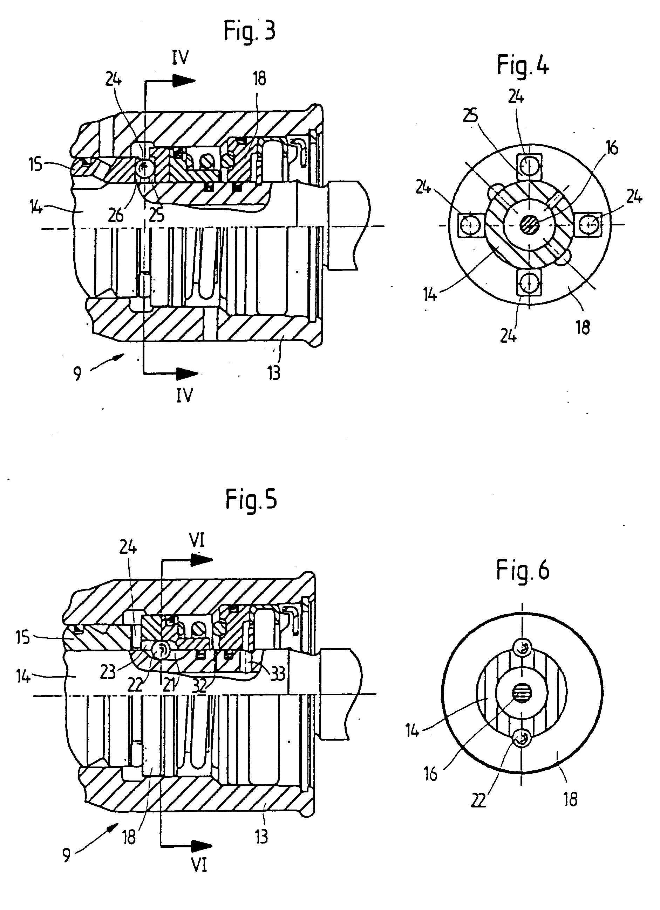

- Fig. 3: einen Abschnitt des Lenkgehäuses mit einer elastischen Drehmitnahme zwischen Steuerhülse und Reaktionskolben im Längsschnitt;
- Fig. 4: denselben Abschnitt entlang der Linie IV-IV in Fig. 3 geschnitten;
- Fig. 5: einen Abschnitt des Lenkgehäuses mit einer axial beweglichen Drehfixierung eines Reaktionskolbens auf einer Steuerhülse im Längsschnitt;
- Fig. 6: denselben Abschnitt entlang der Linie VI-VI in Fig. 5 geschnitten;

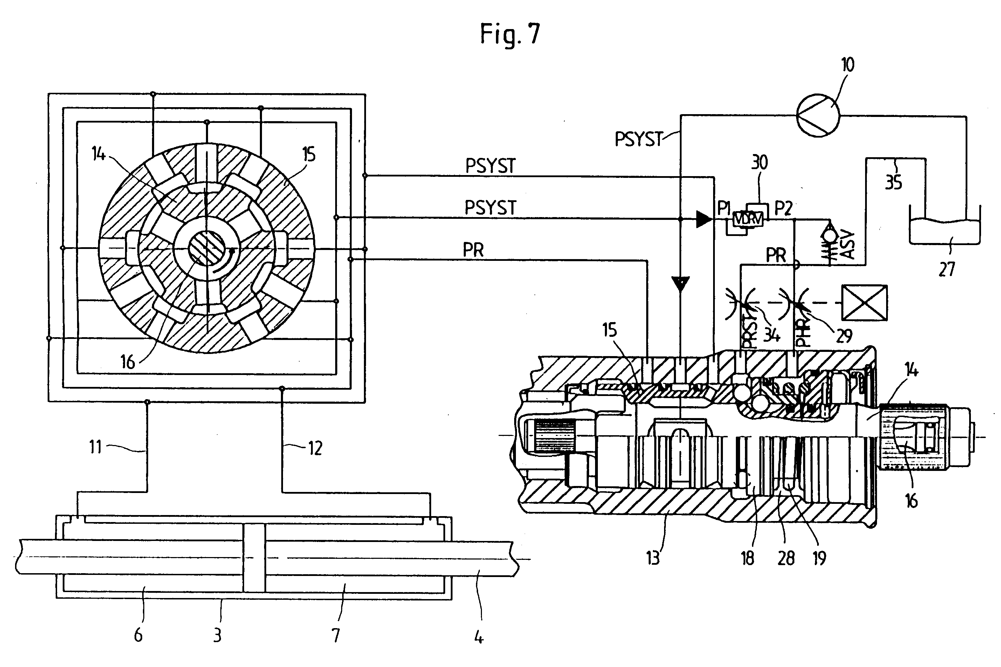

- Fig. 7: einen hydraulischen Schaltplan für die Servolenkvorrichtung;
- Fig. 8: ein Kennlinien-Diagramm für die Servolenkvorrichtung.

Eine Servolenkvorrichtung 1 wird in Verbindung mit einer mechanischen Lenkung 2 benutzt, um das an einem Lenkrad aufzubringende Lenkmoment zu reduzieren. Dies geschieht mittels eines Servozylinders 3, dessen Kolbenstange 4 mit einer Spurstange 5 verbunden ist. Die beiden Kammern 6 und 7 des Servozylinders 3 werden über ein auf einer Lenksäule 8 angeordnetes Drehschieberventil 9 in Abhängigkeit vom Lenkeinschlag von einer Pumpe 10 durch Leitungen 11,12 mit Drucköl beaufschlagt.

Das Drehschieberventil 9 herkömmlicher Konstruktion besteht aus einem fahrgestellfesten Lenkgehäuse 13 mit einer darin angeordneten Eingangswelle 14 und einer darauf gelagerten Steuerhülse 15. Beim Aufbringen eines Drehmomentes über die Lenksäule 8 kann die Eingangswelle 14 in beiden Richtungen um einen Winkel von ca. 3 bis 4° verdreht werden. Diese Drehbewegung wirkt dem Torsionsmoment eines Drehstabes 16 entgegen, der sowohl mit der Eingangswelle 14 als auch mit einem Antriebsritzel 17 verbunden ist, welches über eine Zahnstange die Spurstange 5 bewegt.

Um die gewünschte Variation des Lenkmomentes in Abhänigkeit von der Geschwindigkeit zu erreichen, nämlich ein geringes Lenkmoment beim Parkieren und ein zunehmendes Lenkmoment beim Erhöhen der Geschwindigkeit, wird über eine im folgenden beschriebene Vorrichtung das gewünschte Lenkmoment zum Verdrehen der Eingangswelle 14 im Verhältnis zur Steuerhülse 15 einstellbar gemacht. Zwischen der Eingangswelle 14 und der Steuerhülse 15 ist eine axial bewegliche und gleichzeitig elastische Drehmitnahme angeordnet, mit welcher der Drehstab 16, welcher sonst allein das hydraulische Lenkmoment bestimmen würde, überbrückt werden kann.

In einem Ringraum zwischen dem Lenkgehäuse 13 und der Eingangswelle 14 ist ein Reaktionskolben 18 axial beweglich gegen eine Druckfeder 19 gelagert, die sich mit ihrem anderen Ende gegen einen Abdichtkolben 20 abstützt. Die axial bewegliche Fixierung des Reaktionskolbens 18 mit der Eingangswelle 14 besteht aus in der Eingangswelle 14 angeordneten Längsnuten 21 und in diesen gelagerten Kugeln 22, die in offene Längsnuten 23 des Reaktionskolbens 18 eingreifen.

Die elastische Drehmitnahme zwischen dem Reaktionskolben 18 und der Steuerhülse 15 besteht aus zwischen deren Stirnseiten angeordneten Kugeln 24, die sich beiderseits in V-förmigen Ausnehmungen 25,26 abstützen.

Bei erhöhter Geschwindigkeit drückt die Druckfeder 19 den Reaktionskolben 18 über die Kugeln 24 gegen die Steuerhülse 15 und bewirkt so eine zunehmende Verriegelung von Eingangswelle 14 und Steuerhülse 15, die nur mit einem zusätzlichen Lenkmoment überwunden werden kann. Dazu müssen die Kugeln 24 gegen die Federkraft aus ihren V-förmigen Ausnehmungen 25,26 ausgehoben werden, was am Lenkrad als erhöhtes Eingangsmoment wahrgenommen wird. Dieser Effekt ist erwünscht, um bei hoher Geschwindigkeit eine reduzierte Servowirkung und eine verbesserte Rückmeldung von der Fahrbahn zu erhalten.

Beim Parkieren kann die von der Druckfeder 19 vorgegebene mechanische Grundlast und damit das Lenkmoment aufgehoben werden, in dem in eine Leitung PR für den Rücklauf des Drucköles eine in Abhängigkeit von der Geschwindigkeit des Fahrzeuges variable Blende PRST eingeschaltet wird, die den Rücklauf zu einem Tank 27 aufstaut. Dadurch wird der Reaktionskolben 18 gegen die Druckfeder 19 geschoben und die mechanische Grundlast kompensiert. Das Lenkmoment wird Jetzt nur noch durch den Drehstab 16 bestimmt.

Um eine verbesserte Information über den Fahrbahnkontakt zu vermitteln, ist zwischen dem Systemdruck im Servozylinder 3 und einem Reaktionsraum 28 zwischen Reaktionskolben 18 und Abdichtkolben 20 eine in Abhängigkeit von der Fahrzeuggeschwindigkeit und auf Wunsch weiterer Parameter wie Lenkeinschlag oder Gierbeschleunigung variable Blende 29 eingeschaltet. Die Zuleitung des Drucköles in den Reaktionsraum 28 erfolgt über ein Verhältnisdruckregelventil 30, welches den Systemdruck von maximal 120bar auf Reaktionsdruck von maximal 15 bar herunter regelt. Die Blende 29 und das Verhältnisdruckregelventil 30 sind in eine Leitung 31 eingeschaltet, die an eine von der Pumpe 10 kommende Leitung PSYST für den Systemdruck angeschlossen ist. Der maximale Reaktionsdruck von 15bar wird mit einem Abschneideventil ASV begrenzt, welches die Leitung 31 mit dem Tank 27 verbindet.

Der Rücklauf des Drucköles aus dem Servozylinder 3 und dem Drehschieberventil erfolgt über die Leitung PR zum Tank 27. Mit dem Tank 27 sind auch eine Entlastungsbohrung 32 für den Reaktionsraum 28 in der Eingangswelle 14 und eine Leckölbohrung 33 auf der Rückseite des Abdichtkolbens 20 verbunden.

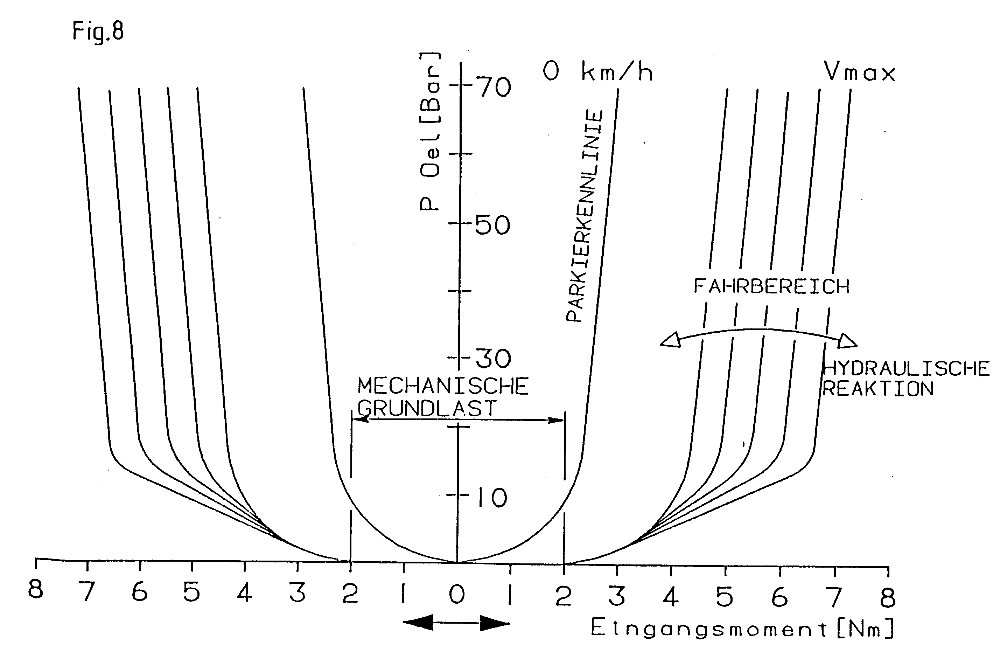

Beim Parkieren kann durch Schließen der variablen Blende PRST der Rücklauf gestaut und die mechanische Grundlast der Druckfeder 19 kompensiert werden, um ein "fingerleichtes" Steuern zu gewährleisten. Dabei ist die andere variable Blende 29 vollständig geschlossen und der Reaktionsraum 28 befindet sich über die Entlastungsbohrung 32 auf dem Rücklaufdruck PR des Tankes 27. Bei zunehmender Geschwindigkeit werden die beiden variablen Blenden 29 und 34 zunehmend geöffnet, um die Kompensation der Federkraft zurückzunehmen. Bei Geradeausfahrt ohne Lenkmanöver wird der Reaktionsdruck im Reaktionsraum 28 auch über die Entlastungsbohrung 32 auf Rücklaufniveau gehalten. Werden aber Lenkmanöver eingeleitet, dann bewirkt der erhöhte Systemdruck über die variable Blende 29 über den Reaktionskolben 18 ein Rückwirkmoment, welches dem Eingangsmoment entgegen wirkt. Diese hydraulische Reaktion kann nach dem Kennlinien-Diagramm gemäß Fig. 8 dazu benutzt werden, die Servowirkung zurückzunehmen und den Kontakt zwischen Lenkrad und Fahrbahn zu verbessern.

Das Abschneideventil ASV begrenzt den maximalen Rückwirkdruck im Reaktionsraum 28 und damit auch ein weiteres Ansteigen des Rückwirkmomentes. Dadurch wird das maximal aufzubringende Lenkmoment begrenzt und bei höheren Geschwindigkeiten sicher gestellt, daß bei Bedarf, beispielsweise einem Ausweichmanöver, Reifenschaden etc. immer genügend Servowirkung zur Verfügung steht.

### Bezugszeichenliste

- 1: Servolenkvorrichtung
- 2: Lenkung
- 3: Servozylinder
- 4: Kolbenstange
- 5: Spurstange
- 6: Kammer
- 7: Kammer
- 8: Lenksäule
- 9: Drehschieberventil
- 10: Pumpe
- 11: Leitung
- 12: Leitung
- 13: Lenkgehäuse
- 14: Eingangswelle
- 15: Steuerhülse
- 16: Drehstab
- 17: Antriebsritzel
- 18: Reaktionskolben
- 19: Druckfeder
- 20: Abdichtkolben
- 21: Längsnuten
- 22: Kugel
- 23: Längsnut
- 24: Kugel
- 25: Ausnehmungen
- 26: Ausnehmungen
- 27: Tank
- 28: Reaktionsraum
- 29: Blende
- 30: Verhältnisdruckregelventil
- 31: Leitung
- 32: Entlastungsbohrung
- 33: Leckölbohrung
- 34: Blende
- 35: Leitung
- PR: Rücklaufdruck
- PRST: Steuerdruck Rücklauf
- PSYST: Systemdruck
- ASV: Abschneideventil
- VDRV: Verhältnisdruckregelventil
- PHR: Reaktionsdruck

## Patentansprüche

1. Servolenkvorrichtung zum Zuführen von Drucköl an linke und rechte Kammern (6,7) eines Servozylinders (3) über ein Drehschieberventil (9) mit einer Pumpe (10), wobei zwischen einer Eingangswelle (14) und einer Steuerhülse (15) des Drehschieberventiles (9) ein mit einer Druckfeder (19) beaufschlagter Reaktionskolben (18) eingeschaltet ist, der axial beweglich und drehfest auf der Eingangswelle (14) gelagert und über eine elastische Drehmitnahme mit der Steuerhülse (15) verbunden ist,
**dadurch gekennzeichnet,**
daß in eine Leitung (31) zwischen der Pumpe (10) und der mit der Druckfeder (19) belasteten Rückseite des Reaktionskolbens (18) ein Verhältnisdruckregelventil (VDRV, 30) zur Reduzierung des Systemdruckes (P) auf einen geringeren Reaktionsdruck (P2) und eine variable Blende (29) zur geschwindigkeitsabhängigen Regelung eines hydraulischen Rückwirkmomentes eingeschaltet sind und
daß in eine Leitung (35) zwischen der Vorderseite des Reaktionskolbens (18) und einem Tank (27) eine variable Blende (34) zur geschwindigkeitsabhängigen Regelung eines Rücklaufdruckes (PR) eingeschaltet ist.

2. Servolenkvorrichtung nach Anspruch 1, dadurch gekennzeichnet, daß zwischen der Leitung (31) zur Rückseite des Reaktionskolbens (18) und der Leitung (PR) zum Tank (27) ein Abschneideventil (ASV) zur Begrenzung des maximalen Reaktionsdruckes (P2) eingeschaltet ist.

3. Servolenkvorrichtung nach Anspruch 1, dadurch gekennzeichnet, daß zwischen einem Reaktionsraum (28) für die Druckfeder (19) auf der Rückseite des Reaktionskolbens (18) und dem Innenraum der Eingangswelle (14) eine Entlastungsbohrung (32) angeordnet ist.

4. Servolenkvorrichtung nach Anspruch 1, dadurch gekennzeichnet, daß die Druckfeder (19) gegen die Vorderseite eines Abdichtkolbens (20) abgestützt ist.

5. Servolenkvorrichtung nach den Ansprüchen 1 und 4, dadurch gekennzeichnet, daß auf der Rückseite des Abdichtkolbens (20) in der Eingangswelle (14) eine Leckölbohrung (33) angeordnet ist.

## Claims

1. Power steering mechanism for supplying compressed oil to left- and right-hand chambers (6, 7) of a servo-cylinder (3) via a rotary slide valve (9) with a pump (10), a reaction piston (18) acted on by a compression spring (19) being installed between an input shaft (14) and a control sleeve (15) of the rotary slide valve (9), which piston is mounted on the input shaft (14) so as to be axially movable and torsion-resistant and is connected to the control sleeve (15) via a flexible rotary coupling, characterized in that
a ratio pressure control valve (VDRV, 30) for reducing the system pressure (P) to a lower reaction pressure (P2) and a variable diaphragm (29) for the speed-dependent control of a hydraulic reaction moment are installed in a line (31) between the pump (10) and the rear side, loaded with the compression spring (19), of the reaction piston (18) and that a variable diaphragm (34) for the speed-dependent control of a return pressure (PR) is installed in a line (35) between the front side of the reaction piston (18) and a tank (27).

2. Power steering mechanism according to Claim 1,
characterized in that a cut-off valve (ASV) for limiting the maximum reaction pressure (P2) is installed between the line (31) to the rear side of the reaction piston (18) and the line (PR) to the tank (27).

3. Power steering mechanism according to Claim 1,
characterized in that a relief hole (32) is arranged between a reaction chamber (28) for the compression spring (19) on the rear side of the reaction piston (18) and the internal chamber of the input shaft (14).

4. Power steering mechanism according to Claim 1,
characterized in that the compression spring (19) is supported against the front side of a sealing piston (20).

5. Power steering mechanism according to Claims 1 and 4,
characterized in that an overflow oil hole (33) is arranged on the rear side of the sealing piston (20) in the input shaft (14).

## Revendications

1. Dispositif de direction assistée pour l'envoi d'huile sous pression au moyen d'une pompe (10) à des chambres gauche et droite (6, 7) d'un servo-cylindre (3) par l'intermédiaire d'un distributeur à tiroir rotatif (9),
un piston de réaction (18) soumis à la force d'un ressort de compression (19) et monté entre un arbre d'entrée (14) et un manchon de commande (15) du distributeur à tiroir rotatif (9) étant mobile axialement sur l'arbre d'entrée (14) avec lequel il est solidarisé en rotation et étant relié au manchon de commande (15) au moyen d'un entraînement élastique en rotation,
caractérisé
en ce qu'une soupape de réglage de rapport de pression (VDRV, 30) destinée à abaisser la pression du système (P) à une pression inférieure de réaction (P2) et un diaphragme variable (29) destiné au réglage d'un moment hydraulique de réaction en fonction de la vitesse sont montés dans un conduit (31) placé entre la pompe (10) et le côté arrière du piston de réaction (18) qui est soumis au ressort de compression (19) et
en ce qu'un diaphragme variable (34) de réglage d'une pression de reflux (PR) en fonction de la vitesse est monté dans un conduit (35) placé entre le côté antérieur du piston de réaction (18) et un réservoir (27).

2. Dispositif de direction assistée selon la revendication 1, caractérisé en ce qu'une soupape de coupure (ASV) destinée à limiter la pression maximale de réaction (P2) est montée entre le conduit (31) menant vers le côté arrière du piston de réaction (18) et le conduit (PR) menant au réservoir (27).

3. Dispositif de direction assistée selon la revendication 1, caractérisé en ce qu'un trou de décompression (32) est disposé entre une chambre de réaction (28), qui est destinée au ressort de compression (19) et qui est située sur le côté arrière du piston de réaction (18), et la chambre intérieure de l'arbre d'entrée (14).

4. Dispositif de direction assistée selon la revendication 1, caractérisé en ce que le ressort de compression (19) prend appui contre le côté antérieur d'un piston d'étanchéité (20).

5. Dispositif de direction assistée selon les revendications 1 et 4, caractérisé en ce qu'un trou (33) destiné aux fuites d'huile est disposé dans l'arbre d'entrée (14) sur le côté arrière du piston d'étanchéité (20).
